# EUROPÄISCHE PATENTSCHRIFT

(11) **EP 0 793 394 B1**
(45) Veröffentlichungstag und Bekanntmachung des Hinweises auf die Patenterteilung: **10.05.2006**
(21) Anmeldenummer: 97103370.9
(22) Anmeldetag: 28.02.1997
(51) Int. Cl.: H04Q 7/22, H04Q 3/00

(54) **Verfahren zur Administrierung zusätzlicher Dienste in einem mobilen Kommunikationsnetz**
Method of supplementary services management in a mobile communications network
Méthode de gestion des services supplémentaires dans un réseau de communications mobiles

(30) Priorität: 01.03.1996 DE 19608464
(43) Veröffentlichungstag der Anmeldung: 03.09.1997
(73) Patentinhaber: SIEMENS AKTIENGESELLSCHAFT, 80333 München (DE)
(72) Erfinder: Becher, Reinhard, Dr.-Ing., 81245 München (DE)

(56) Entgegenhaltungen:
- WO-A-95/26114
- WO-A-95/28812
- CA-A- 2 153 281
- DE-A- 4 441 753
- EUROPEAN TELECOMMUNICATIONS STANDARDS INSTITUTE: "ETS 300 599 European digital cellular telecommunications system (Phase 2); Mobile Application Part ( MAP ) specification ( GSM 09.02 ), pp. 1, 31, 149-159, 237, 238, 539" November 1995 , ETSI , SOPHIA-ANTIPOLIS, FR, XP002106804 * Absatz 2.4.1 * * Absatz 9.3 - Absatz 9.9 * * Absatz 14.2.2.13 * * Absatz 14.2.2.18 * * Absatz 19.7.4 *

## Beschreibung

Die Erfindung betrifft ein Verfahren zur Administrierung zusätzlicher Dienste in einem mobilen Kommunikationsnetz, wobei die zusätzlichen Dienste gemäß einer intelligenten Netzstruktur nutzbar sind.

Mobile Kommunikationssysteme, wie das bekannte GSM-Mobilfunknetz (Global System for Mobile Communications) bestehen aus untereinander vernetzten Vermittlungseinrichtungen, an die jeweils Basisstationen, und mit Hilfe dieser Basisstationen über eine Luftschnittstelle Kommunikationsendgeräte anschließbar sind. Diese Kommunikationsendgeräte ermöglichen einem Teilnehmer dieses mobilen Kommunikationssystems den Netzzugang. Die Vermittlungseinrichtungen bewirken weiterhin den Übergang zu weiteren Netzen, z.B. Datenübertragungsnetzen oder einem Festnetz.

Aus dem GSM-Mobilfunknetz ist es weiterhin bekannt, daß jedem Teilnehmer zwei Speichereinheiten, in denen jeweils teilnehmerspezifische Daten zu den netzeigenen Diensten gespeichert sind, zugeordnet sind. Eine dieser Speichereinheiten realisiert das sogenannte Heimatregister, das sich in der Regel an einem fest definierten Ort befindet und in dem die der Registrierung des Teilnehmers zugrundeliegenden Daten abgelegt sind. Dem momentanen Aufenthaltsort des mobilen Teilnehmers ist eine zweite Speichereinheit für das sogenannte Besucherregister zugeordnet. Je nach Aufenthaltsort des mobilen Teilnehmers ändert sich auch die Speichereinheit für das Besuchsregister, in dem sich die für diesen Teilnehmer spezifischen Daten befinden.

Die von der Erfindung betroffenen zusätzlichen Dienste sollen gemäß einer intelligenten Netztopologie durch unabhängige Dienstesteuerungseinheiten realisiert werden. Diese Dienstesteuerungseinheiten und die darin abgelegten Profile der zusätzlichen Dienste, einschließlich der zu ihrer Realisierung notwendigen Informationen, sind damit unabhängig vom mobilen Kommunikationsnetz änderbar. Aus Biala, J., "Mobilfunk und Intelligente Netze", Vieweg Verlag, Wiesbaden, 1995, S.37/8, 66-71, 146-151, 239-248, 308-309 ist es bekannt, daß die in einem intelligenten Netz nutzbaren Dienste in einer Dienstevermittlungseinheit angestoßen werden, um einen Ausstieg aus der üblichen Anrufverarbeitung zu bewirken und damit einen Zugriff zu zusätzlichen Diensten zu aktivieren. Solche Dienstevermittlungseinheiten sind in der Regel in den Vermittlungseinrichtungen realisiert.

Aus der obengenannten Patentanmeldung ist es bekannt, die Nutzung zusätzlicher Dienste dadurch einzuleiten, daß eine aktive Eingabe einer für diesen Dienst festgelegten Rufnummer durch den jeweiligen Teilnehmer erfolgt. Die Rufnummer wird in der Vermittlungseinrichtung ausgewertet und der Ruf zur Umsetzung zur jeweiligen Dienstesteuerungseinheit weitergeleitet wird. Dies bedeutet jedoch zusätzlichen Aufwand für den Teilnehmer.

Weiterhin ist es bekannt, eine Dienstekennung als teilnehmerindividuelles Teilnehmerdatum in der jeweiligen Teilnehmerdatenbasis vorzusehen und durch Auswerten dieser Dienstekennung während der Anrufbehandlung bei einem ankommenden oder abgehenden Anruf eine Verzweigung zu einer in einer Teilnehmerdatenbasis des intelligenten Netzes angegebenen Dienstesteuerungseinheit auszulösen. Für diese Lösung sind die zusätzlichen Dienste für den Teilnehmer zugreifbar, ohne daß er dies explizit durch Angabe einer speziellen Rufnummer veranlassen muß. Eine Unterscheidung zwischen den zusätzlichen Diensten ist damit jedoch nicht möglich, da maximal eine Dienstekennung im Besucherregister, das die zusätzlichen Dienste für die vom Teilnehmer abgehenden Rufe steuert, und im Heimatregister, das die für den Teilnehmer ankommenden Rufe steuert, enthalten ist. Damit ist die Flexibilität bei der Gestaltung und Inanspruchnahme von zusätzlichen Diensten stark eingeschränkt.

Die PCT-Patentanmeldung WO 95/28812 offenbart die getreue Abbildung von Teilnehmerdaten zwischen zwei Speichereinheiten eines Mobilfunknetzes.

Die kanadische Patentanmeldung CA2153281 offenbart Mobilfunknetze wobei mehreren Dienstesteuerungseinheiten addressierbar sind.

Der Erfindung liegt die Aufgabe zugrunde, für ein mobiles Komznunikationsnetz die Administrierung von zusätzlichen Diensten zu vereinfachen und flexibler zu gestalten. Diese Aufgabe wird durch das Verfahren nach Patentanspruch 1 gelöst. Weitere erfindungsgemäße Ausgestaltungen sind den Unteransprüchen zu entnehmen.

Zur Administrierung zusätzlicher Dienste werden zusätzliche Informationen über die Zuordnung von zusätzlichen Diensten jeweils zu Dienstesteuerungseinheiten und den Status des jeweiligen zusätzlichen Dienstes teilnehmerspezifisch in mindestens zwei einem Teilnehmer zuordenbaren Speichereinheiten vorgesehen. Bei einem Verbindungsaufbau werden diese zusätzlichen Informationen automatisch abgefragt und falls ein zusätzlicher Dienst aktiviert ist, wird eine Dienstaufforderung zu der zugeordneten Dienstesteuerungseinheit ausgelöst.

Durch eine derartige Speicherung und Administrierung zusätzlicher Informationen über zusätzliche Dienste wird eine größere Vielfalt an zusätzlichen Diensten möglich, die jeweils einem Teilnehmer zuordenbar sind; da verschiedene Diensteanbieter (Service Provider) und verschiedene Dienstesteuerungseinheiten unterschieden werden können. Diese zusätzlichen Diensten sind jeweils bei einem Verbindungsaufbau eines Teilnehmers automatisch, durch entsprechende Steuervorgänge in einer Dienstevermittlungseinheit der Vermittlungseinrichtung aufrufbar. Dadurch, daß die selbe Information jeweils in mindestens zwei Speichereinheiten verfügbar ist, z.B. dem Heimatregister und dem Besucherregister, ist eine gleichartige Verarbeitung von abgehenden und ankommenden Rufen bezüglich der zusätzlichen Dienste möglich. Ebenso ist es für einen Teilnehmer möglich, die Gesamtheit der zusätz-lichen Dienste mit Hilfe der zusätzlichen Informationen zu gestalten, d.h. ggf. Änderungen daran vorzunehmen.

Gemäß einer vorteilhaften Ausgestaltung dieses Lösungsprinzips ist es vorgesehen, daß bei jeder Neuzuordnung einer Speichereinheit zu einem Teilnehmer und jeder Änderung von zusätzlichen Informationen die Speicherung der aktuellen zusätzlichen Informationen in beiden Speichereinheiten vorgenommen wird. Diese Maßnahme, die ohne aktive Beeinflussung des Teilnehmers stattfindet, gewährleistet, daß die zusätzlichen Informationen in beiden Speichereinheiten korrespondieren und damit die Informationen betreffend zusätzlicher Dienste für abgehende und ankommende Rufe auf die gleiche Art und Weise änderbar sind.

Die zusätzlichen Informationen über die Zuordnung von zusätzlichen Diensten zu Dienstesteuerungseinheiten und über den Status des jeweiligen zusätzlichen Dienstes enthalten dabei vorteilhafterweise
- Angaben über die Aktivierbarkeit bzw. Änderbarkeit des jeweiligen zusätzlichen Dienstes,
- Angaben über die Art des jeweiligen zusätzlichen Dienstes, d.h. ob er für ankommende oder abgehende Rufe vorgesehen ist und bei welcher Vermittlungseinrichtung der zusätzliche Dienst bearbeitet werden soll,
- Angaben über eine kommunikationsnetzspezifische Adresse der jeweiligen Dienstesteuerungseinheit,
- Angaben über einen dienstesteuerungseinheitsspezifischen Dienstschlüssel des jeweiligen zusätzlichen Dienstes, oder
- Angaben über Identität des den jeweiligen zusätzlichen Dienst anbietenden Operator.

Diese Angaben sind jeweils als Optionen gedacht und müssen nicht in ihrer Gesamtheit vorliegen. Jede dieser Angaben erweitert jedoch die Funktionalität der zusätzlichen Informationen und erweitert die Flexibilität der Administrierung der zusätzlichen Dienste.

Angaben über die Aktivierbarkeit eines zusätzlichen Dienstes gestatten dem Diensteanbieter (Operator) die Änderung bzw. Aktivierung/Deaktivierung des zusätzlichen Dienstes für den Teilnehmer zu sperren. Damit kann ein Mißbrauch eines zusätzlichen Dienstes zum Nachteil des Diensteanbieters verhindert werden. Hierbei kann auch berücksichtigt werden, daß eine Aktivierung/Deaktivierung bzw. Änderung nur unter bestimmten Bedingungen, die der Teilnehmer erfüllen muß, möglich ist.

Die Angabe über die Art des zusätzlichen Dienstes bezeichnet die Tatsache, ob der zusätzliche Dienst für einen abgehenden oder einen ankommenden Ruf vorgesehen ist. Somit können die zusätzlichen Dienste nach der Vermittlungseinrichtung, die diese Dienste im Laufe eines Verbindungsaufbaus anfordern kann, klassifiziert werden.

Sind auch Angaben über eine kommunikationsnetzspezifische Adresse der jeweiligen den zusätzlichen Dienst anbietenden Dienstesteuerungseinheit (z.B. eine E.164 Adresse im GSM-Mobilfunksystem) enthalten, kann zwischen mehreren denselben Dienst anbietenden Dienstesteuerungseinheiten unterschieden werden. Eine weitere Umrechnung von einer Bezeichnung des Dienstes zu einer Adresse der Dienstesteuerungseinheit kann entfallen.

Der dienstesteuerungseinheitsspezifische Dienstschlüssel dient dazu, innerhalb einer Dienstesteuerungseinheit verschiedene zusätzliche Dienste zu unterscheiden. Dadurch wird es möglich, auf einer Dienstesteuerungseinheit verschiedene Dienste, ggf. auch zusätzliche Dienste verschiedener Diensteanbieter zu realisieren und sie für den Teilnehmer unterscheidbar zu machen.

Zur Unterscheidung der die zusätzlichen Dienste anbietenden Diensteanbieter (Operatoren) dienen auch Angaben über die Identität der Operatoren. Diese Angaben können bei Abrechnungen und der Selektierung von gleichartigen zusätzlichen Diensten bei verschiedenen Operatoren herangezogen werden.

Vorteilhafterweise kann auch ein Aktivierungszeichen für die Gesamtheit der zusätzlichen Dienste eines Teilnehmers vorgesehen sein. Dieses Aktivierungszeichen wird bei einem Verbindungsaufbau abgefragt. Soll kein zusätzlicher Dienst für den Teilnehmer verfügbar sein, so wird auf Abfrage des Aktivierungszeichen keine weitere für eine Aktivierung eines zusätzlichen Dienstes notwendige Maßnahme zu treffen sein und der Verbindungsaufbau wird unbeeinflusst weitergeführt. Zeigt das Aktivierungszeichen jedoch das Vorhandensein eines zur Verfügung stehenden zusätzlichen Dienstes an, wird z.B. durch die Dienstevermittlungseinheit einer Vermittlungseinrichtung die Abfrage und ggf. Inanspruchnahme eines zusätzlichen Dienstes eingeleitet.

Die Speichereinrichtung zur Realisierung des Heimat- und Besucherregisters und zur Aufnahme der zusätzlichen Informationen kann als eigenständige Einheit betrachtet werden oder in einer Vermittlungseinrichtung realisiert werden. Zur Administrierung zusätzlicher Dienste muß jedoch eine Vermittlungseinrichtung die Übertragung der zusätzlichen Informationen zwischen den Speichereinheiten sicherstellen, dies geschieht nach einer Ausgestaltungsform innerhalb einer Nachricht zum Teilnehmerdateneintrag, wie sie z.B. für das GSM-Mobilfunksystem standardisiert ist.

Eine vorteilhafte Möglichkeit zur Übertragung von Änderungsinformationen für die zusätzlichen Informationen vom Kommunikationsendgerät zu den Speichereinheiten bzw. zwischen den Speichereinheiten besteht darin, sie innerhalb von unstrukturierten Zusatzdienstdaten (unstructured supplementary data) zu übermitteln. Dies bringt den Vorteil mit sich, keine zusätzlichen, noch nicht standardisierten Übermittlungsformate einzuführen, sondern auf vorhandene Protokolle zurückzugreifen (z.B. aus dem GSM-Mobilfunksystem bekannt).

Die Vermittlungseinrichtung sieht dabei vor, bei festgestellten deaktivierten zusätzlichen Diensten keine Nachfrage bei der jeweiligen Dienstesteuerungseinheit durchzuführen, sondern durch die nunmehr mögliche direkte Aktivierungsabfrage der zusätzlichen Informationen jede Nachfrage bei der Dienstesteuerungseinheit zu unterdrücken.

Anhand von zeichnerischen Darstellungen soll der Erfindungsgegenstand im folgenden näher erläutert werden.

Dabei zeigen
- FIG 1: ein Mobilfunksystem,
- FIG 2: eine Speichereinheit mit enthaltenen zusätzlichen Informationen über zusätzliche Dienste,
- FIG 3: die Abfrage bzw. Inanspruchnahme zusätzlicher Dienste bei einem von einem mobilen Teilnehmer abgehenden Verbindungsaufbau,
- FIG 4 und 5: die Abfrage bzw. Inanspruchnahme von zusätzlichen Diensten bei einem für einen mobilen Teilnehmer ankommenden Verbindungsaufbau, und
- FIG 6: die Änderbarkeit des Profils von zusätzlichen Diensten für einen Teilnehmer am Beispiel der Deaktivierung.

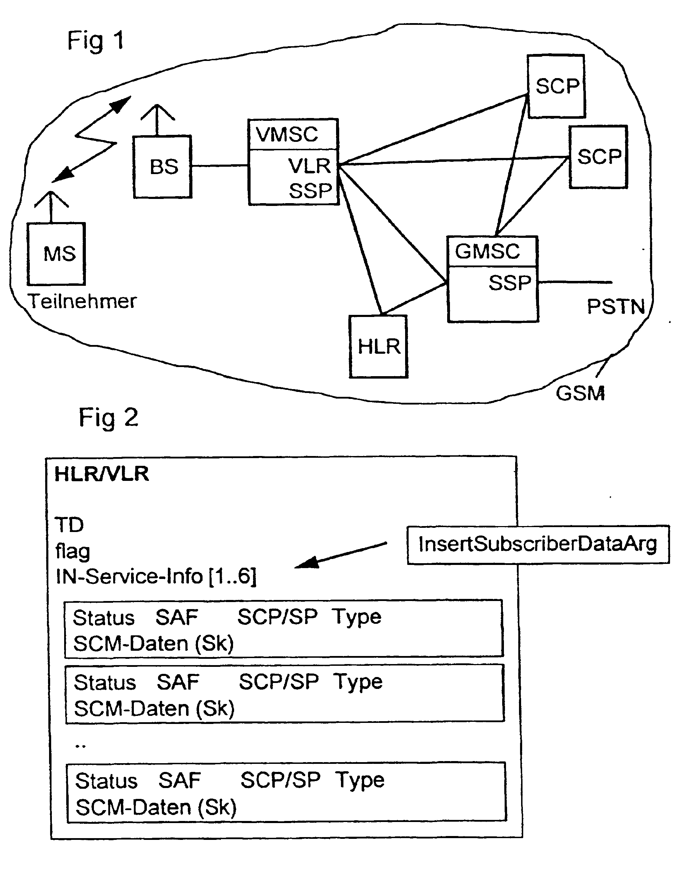

Das mobile Kommunikationsnetz GSM nach FIG 1 ist beispielsweise als GSM-Mobilfunknetz ausgestaltet. Dazu enthält es Vermittlungseinrichtungen VMSC, GMSC, die miteinander verbunden sind. Eine Vermittlungseinrichtung VMSC stellt die Verbindung zu einem mobilen Teilnehmer über eine Basisstation BS, die mit der Vermittlungseinrichtung VMSC drahtgebunden verbunden ist, und über eine Luftschnittstelle zwischen Basisstation BS und einer Mobilstation MS her. Die Mobilstation MS ist das Kommunikationsendgerät des mobilen Teilnehmers.

Eine weitere Vermittlungseinrichtung GMSC bildet den Netzübergang in ein weiteres Netz z.B. ein Festnetz PSTN. Weiterhin enthält das mobile Kommunikationsnetz GSM Dienstesteuerungseinheiten SCP, die jeweils mit zumindest einer Vermittlungseinrichtung VMSC, GMSC verbunden sind. Bei diesen Verbindungen ist es nicht notwendig, daß jede Dienstesteuerungseinheit SCP mit jeder Vermittlungseinrichtung VMSC, GMSC direkt verbunden ist, es genügt wenn diese über das Kommunikationsnetz GSM erreichbar sind. Nach FIG 1 ist eine Speichereinheit HLR als Heimatregister des mobilen Teilnehmers eine eigenständige Einheit, die mit beiden hier beispielhaft dargestellten Vermittlungseinrichtungen VMSC, GMSC verbunden ist. Beide Vermittlungseinrichtungen VMSC, GMSC enthalten als ein Untersystem eine Dienstevermittlungseinheit SSP. Die Vermittlungseinrichtung VMSC des Anschlusses des mobilen Teilnehmers enthält weiterhin ein Besuchsregister VLR, solange sich der mobile Teilnehmer im Einzugsbereich dieser Vermittlungseinrichtung VMSC befindet.

Vom mobilen Teilnehmer abgehende Verbindungsaufbaumeldungen werden in der Vermittlungseinrichtung VMSC, in deren Einzugsbereich sich der mobile Teilnehmer befindet, zuerst verarbeitet. Dort ist die Abfrage von zusätzlichen Diensten SS zu veranlassen. Für den mobilen Teilnehmer ankommende Rufe, beispielhaft wird hier angenommen, daß diese aus dem Festnetz PSTN die Vermittlungseinrichtung GMSC des Netzübergangs erreichen, müssen in dieser Vermittlungseinrichtung GMSC des Netzübergangs bearbeitet werden und dort die innerhalb des Mobilfunknetzes GSM zur Verfügung stehende zusätzliche Dienste SS nachgefragt werden. Die Administrierung und Inanspruchnahme von zusätzlichen Diensten SS soll anhand der weiteren Figuren erläutert werden.

Eine Speichereinheit HLR, VLR nach FIG 2 stellt das Heimatregister HLR bzw. Besucherregister VLR des mobilen Kommunikationssystems GSM dar. Diese Speichereinheit HLR, VLR enthält zusätzliche Informationen IN-Service-Info über zusätzliche Dienste SS entsprechend eines intelligenten Netzes. Diese zusätzlichen Informationen IN-Service-Info sind dabei zusätzlich zu Teilnehmerdaten TD eines Teilnehmers z.B. in Tabellenform einem Teilnehmer zugeordnet. Die zusätzlichen Informationen IN-Service-Info können Angaben über mehrere zusätzliche Dienste SS enthalten. Beispielhaft wird in Fig 2 die Maximalzahl 6 zusätzliche Dienste SS angenommen.

Je zusätzlichen Dienst sind Angaben enthalten über den Status des zusätzlichen Dienstes (Status), d.h. darüber ob dieser Dienst aktiviert oder deaktiviert ist, Angaben SAF über eine Aktivierbarkeit des jeweiligen zusätzlichen Dienstes SS durch den Teilnehmer, Angaben SCP/SP über die Identität des den jeweiligen zusätzlichen Dienst SS anbietenden Diensteanbieters bzw. die Identität der Dienstesteuerungseinheit SCP, die Art (Type) des zusätzlichen Dienstes SS und weitere Angaben über den zusätzlichen Dienst SS, z.B. eine kommunikationsnetzspezifische Adresse SCM-Data der Dienstesteuerungseinheit SCP und ein dienstesteuerungseinheitsspezifischen Dienstschlüssel SK.

Die Informationen zu einem Teilnehmer enthalten weiterhin ein Aktivierungszeichen flag, das daraufhin abgefragt werden kann, ob einer der zusätzlichen Dienste SS aktiviert ist. Stehen überhaupt keine zusätzlichen Dienste SS dem Teilnehmer zur Verfügung, dann braucht nach Abfrage dieses Aktivierungszeichens flag keine weitere Suche innerhalb der zusätzlichen Informationen IN-Service-Info geschehen. Weist das Aktivierungszeichen flag jedoch auf aktivierte zusätzliche Dienste SS hin, so müssen die zusätzlichen Informationen IN-Service-Info beim Verbindungsaufbau berücksichtigt werden.

Zur Speicherung der zusätzlichen Informationen IN-Service-Info in den Speichereinheiten HLR, VLR dient eine Nachricht zum Teilnehmerdateneintrag InsertSubscriberDataArg. Diese Nachricht wird ausgetauscht, wenn der Teilnehmer Änderungen an den zusätzlichen Informationen IN-Service-Info vornimmt. Diese Nachricht zum Teilnehmerdateneintrag InsertSubscriberDataArg, die für Basisdienste innerhalb des GSM-Mobilfunksystems vorgesehen ist, kann hier vorteilhafterweise auch für die zusätzlichen Dienste SS genutzt werden.

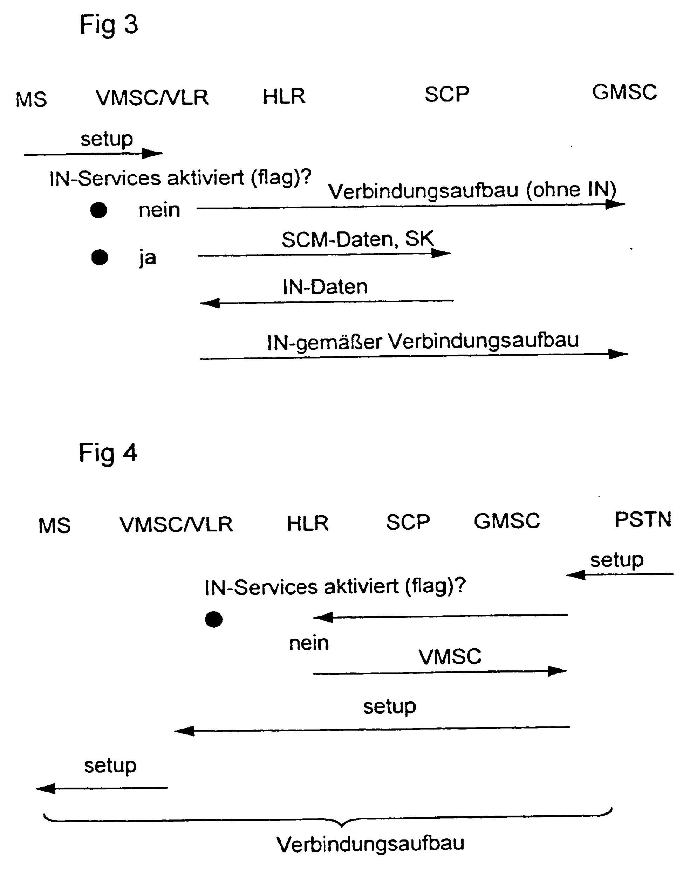

Beim Gesprächsaufbau nach FIG 3 geht dieser vom mobilen Teilnehmer über die Mobilstation MS (Kommunikationsendgerät) aus. Die Verbindungsaufbaumeldung setup erreicht die Vermittlungseinrichtung VMSC/VLR, in deren Einzugsbereich sich die Mobilstation MS befindet. In der Vermittlungseinrichtung VMSC wird das Besuchsregister VLR daraufhin abgefragt, z.B. anhand des Aktivierungszeichens flag, ob zusätzliche Dienste SS aktiviert sind. Ist dies nicht der Fall, erfolgt der Gesprächsaufbau ohne Inanspruchnahme von zusätzlichen Diensten SS.

Sind zusätzliche Dienste SS aktiviert, so werden aus den zusätzlichen Informationen IN-Service-Info des Besuchsregisters VLR bezüglich des rufenden Teilnehmers die Angaben abgefragt, die zur Bezeichnung der Dienstesteuerungseinheit SCP für den zusätzlichen Dienst SS benötigt werden. Bei mehreren konkurrierenden zusätzlichen Diensten SS ist innerhalb der zusätzlichen Informationen IN-Service-Info eine Priorisierung vorzusehen, z.B. anhand eines Preisvergleiches oder des Zeitpunkts der Aktivierung.

Von der Vermittlungseinrichtung VMSC wird eine Signalisierung zur den zusätzlichen Dienst SS anbietenden Dienstesteuerungseinheit SCP eingeleitet. Die Dienstesteuerungseinheit SCP entnimmt dieser Signalisierung Angaben (z.B. der Diensteschlüssel Sk) über den gewünschten zusätzlichen Dienst SS und sendet die zur Gewährleistung des zusätzlichen Dienstes notwendigen Daten (IN-Daten) zurück zur Vermittlungseinrichtung VMSC. Mit Hilfe dieser Daten über den zusätzlichen Dienst SS geschieht in Folge ein Verbindungsaufbau, der den zusätzlichen Dienst SS berücksichtigt.

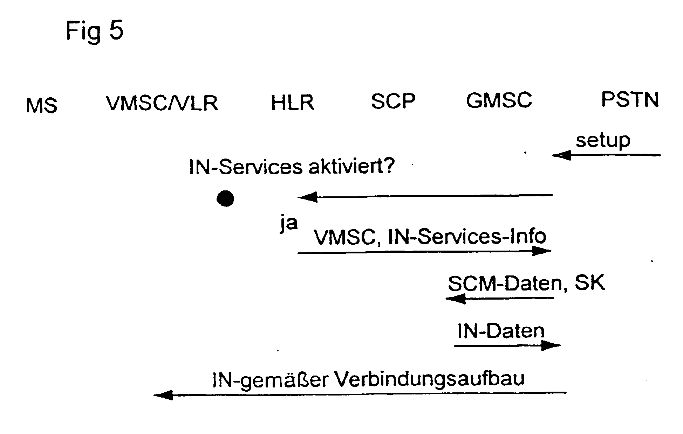

FIG 4 und 5 zeigen den Fall der für den mobilen Teilnehmer ankommenden Rufe. Eine Verbindungsaufbaumeldung setup aus dem Festnetz PSTN erreicht die den Netzübergang gewährleistende Vermittlungseinrichtung GMSC. Von dieser Vermittlungseinrichtung GMSC geschieht bezüglich des mobilen Teilnehmers eine Anfrage in dessen Heimatregister HLR. Dort wird festgestellt, ob zusätzliche Dienste SS aktiviert sind. Ist dies nicht der Fall, so wird gemäß FIG 4 der Verbindungsaufbau fortgesetzt, ist dies der Fall, dann geschieht dies gemäß FIG 5.

Ist kein zusätzlicher Dienst SS aktiviert, übermittelt das Heimatregister HLR der Vermittlungseinrichtung GMSC des Netzübergangs lediglich die Adresse der Vermittlungseinrichtung VMSC, über die der mobile Teilnehmer erreichbar ist. Daraufhin setzt die Vermittlungseinrichtung GMSC des Netzübergangs den Verbindungsaufbau zum mobilen Teilnehmer ohne die Inanspruchnahme von zusätzlichen Diensten SS fort.

Sind jedoch zusätzliche Dienste SS aktiviert, werden der Vermittlungseinrichtung GMSC des Netzübergangs vom Heimatregister HLR nicht nur die Adresse der Vermittlungseinrichtung VMSC für den mobilen Teilnehmer, sondern auch zusätzliche Informationen IN-Service-Info über die zusätzlichen Dienste übermittelt. Die Vermittlungseinrichtung GMSC des Netzübergangs fragt nun bei der zugeordneten Dienstesteuerungseinheit SCP weitere Informationen über den zusätzlichen Dienst SS nach. Die Vermittlungseinrichtung GMSC kann nach Erhalt der weiteren Informationen über den zusätzlichen Dienst SS den Verbindungsaufbau gemäß dem zusätzlichen Dienst SS fortsetzen.

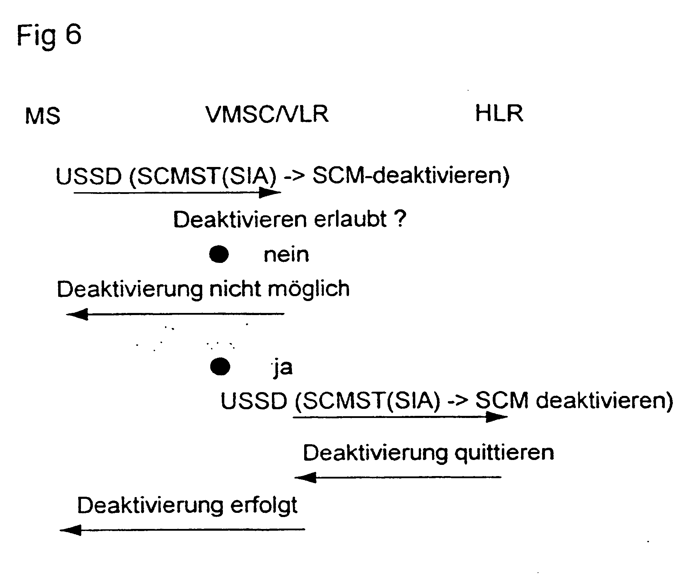

Zur Aktivierung/Deaktivierung bzw. Änderung von zusätzlichen Informationen IN-Service-Info zu zusätzlichen Diensten SS übermittelt der mobile Teilnehmer über das Kommunikationsendgerät MS der nächsten Vermittlungseinrichtung VMSC Änderungsinformationen SCMST innerhalb von unstrukturierten Zusatzdienstdaten USSD (siehe FIG 6). In der Vermittlungseinrichtung VMSC wird im Besucherregister VLR nachgefragt, ob diese Änderungen gestattet sind. Ist dies nicht der Fall, dann geschieht eine Rückmeldung an den mobilen Teilnehmer, daß diese Deaktivierung (als Beispiel für eine Änderungsanfrage) nicht möglich ist. Ist die Deaktivierung eines zusätzlichen Dienstes erlaubt, dann geschieht dies im Besucherregister VLR und darüberhinaus wird in einer weiteren Meldung innerhalb von unstrukturierten Zusatzdienstdaten USSD vom Besucherregister VLR zum Heimatregister HLR des mobilen Teilnehmers die Änderungsinformationen SCMST übermittelt. Auch dort findet nun diese Deaktivierung statt, die quittiert wird und über die Vermittlungseinrichtung VMSC dem mobilen Teilnehmer bestätigt wird.

Die Änderungsinformationen SCMST innerhalb von unstrukturierten Zusatzdienstdaten USSD enthalten beispielsweise in einem Service Identifikationsteil SIA Angaben über die Identität des Diensteanbieters SCP/SP, so sind auch zusätzliche Dienste SS von einzelenen Diensteanbietern separat änderbar.

## Patentansprüche

1. Verfahren zur Administrierung zusätzlicher Dienste (SS) in einem mobilen Kommunikationsnetz (GSM)
- mit vernetzten Vermittlungseinrichtungen (VMSC, GMSC), an die über weitere Einrichtungen (BS) den Teilnehmerzugang ermöglichende Kommunikationsendgeräte (MS) anschließbar sind und/oder über die Übergänge zu weiteren Netzen (PSTN) bewirkt werden können,
- mit zumindest einer den jeweiligen zusätzlichen Dienst (SS) steuernden Dienstesteuerungseinheit (SCP), und
- mit zumindest zwei Speichereinheiten (HLR, VLR) für teilnehmerspezifische Daten (TD), **dadurch gekennzeichnet, daß** in beiden einem Teilnehmer zugeordneten Speichereinheiten (HLR, VLR) teilnehmerspezifisch gespeicherte zusätzliche Informationen (IN-Service-Info) über die Zuordnung von zusätzlichen Diensten (SS) jeweils zu Dienstesteuerungseinheiten (SCP) und den Status des jeweiligen zusätzlichen Dienstes (SS) vorliegen, und
- bei jeder Neuzuordnung einer Speichereinheit (HLR, VLR) zu einem Teilnehmer und/oder
- bei jeder Änderung von zusätzlichen Informationen (IN-Service-Info)
- ein getreues Abbild der aktuellen zusätzlichen Informationen (IN-Service-Info) in den zumindest zwei Speichereinheiten (HLR, VLR) erzeugt wird.

2. Verfahren nach Anspruch 1, bei dem
zumindest Teile der zusätzlichen Informationen (IN-Service-Info) zwischen den Speichereinheiten (HLR, VLR) in einer Nachricht zum Teilnehmerdateneintrag (insertSubscriberData-Arg) übertragen werden.

3. Verfahren nach Anspruch 1 oder 2, bei dem
die zusätzlichen Informationen (IN-Service-Info) Angaben (SAF) über eine Aktivierbarkeit bzw. Änderbarkeit des jeweiligen zusätzlichen Dienstes (SS) enthalten.

4. Verfahren nach einem der Ansprüche 1 bis 3, bei dem
ein teilnehmerindividuelles Aktivierungszeichen (flag) für die Gesamtheit der zusätzlichen Dienste (SS) in der Speichereinheit (HLR, VLR) vorgesehen ist, das bei einem Verbindungsaufbau abgefragt wird und
abhängig vom Vergleichsergebnis die zusätzlichen Informationen (IN-Service-Info) beim Verbindungsaufbau berücksichtigt werden.

5. Verfahren nach einem der Ansprüche 1 bis 4, bei dem
die zusätzlichen Informationen (IN-Service-Info) Angaben über die Art (type) des jeweiligen zusätzlichen Dienstes (SS) und/oder eine kommunikationsnetzspezifische Adresse (SCM-Data) der jeweiligen Dienstesteuerungseinheit (SCP) enthalten.

6. Verfahren nach einem der Ansprüche 1 bis 5, bei dem
die zusätzlichen Informationen (IN-Service-Info) Angaben über einen dienstesteuerungseinheitsspezifischen Dienstschlüssel (SK) des jeweiligen zusätzlichen Dienstes (SS) enthalten.

7. Verfahren nach einem der Ansprüche 1 bis 6, bei dem
die zusätzlichen Informationen (IN-Service-Info) Angaben über Identität des den jeweiligen zusätzlichen Dienstes (SS) anbietenden Diensteanbieters (SCP/SP) enthalten.

8. Verfahren nach einem der Ansprüche 1 bis 7, bei dem
die zusätzlichen Informationen (IN-Service-Info) und/oder das Aktivierungszeichen (flag) durch einen Teilnehmer über das Kommunikationsendgerät (MS) änderbar sind, sofern für diese Änderung keine Sperrung vorgesehen ist.

9. Verfahren nach einem der Ansprüche 1 bis 8, bei dem
die zusätzlichen Informationen (IN-Service-Info) betreffende Änderungsinformationen (SCMST) vom Kommunikationsendgerät (MS) zu den Speichereinheiten (HLR, VLR) und/oder zwischen den Speichereinheiten (HLR, VLR) innerhalb von unstrukturierten Zusatzdienstdaten (USSD) übertragen werden.

10. Verfahren nach einem der Ansprüche 1 bis 9, bei dem
bei deaktivierten zusätzlichen Diensten (SS) durch die die jeweilige Speichereinheit (HLR, VLR) abfragende Vermittlungseinrichtung (VMSC, GMSC) eine Nachfrage bei der jeweiligen Dienstesteuerungseinheit (SCP) unterdrückt wird.

11. Verfahren nach einem der vorhergehenden Ansprüche, bei
dem zur Auswahl eines von mehreren den jeweiligen zusätzlichen Dienst (SS) anbietenden Diensteanbietern innerhalb von unstrukturierten Zusatzdienstdaten (USSD) die Identität des Diensteanbieters (SCP/SP) ausgewertet wird und eine den Diensteanbieter (SCP/SP) auswählende Adressierung eines Datensatzes der zusätzlichen Informationen (IN-Service-Info) erfolgt.

12. Verfahren nach Anspruch 11, bei dem
die Identität des Diensteanbieters (SCP/SP) in einem Service-Identifikationsteil (SIA) der unstrukturierten Zusatzdienstdaten (USSD) übermittelt wird.

## Claims

1. Method for administering additional services (SS) in a mobile communication network (GSM)
- with networked switching facilities (VMSC, GMSC), to which communication terminals allowing subscriber access can be connected via further facilities (BS) and/or via which transitions can be made to further networks,
- with at least one service control unit (SCP) controlling the respective additional service (SS) and
- with at least two storage units (HLR, VLR) for subscriber-specific data (TD),
**characterised in that**
additional information (IN-Service-Info) stored in a subscriber-specific manner about the assignment of additional services (SS) to respective service control units (SCP) and the status of the respective additional service (SS) is present in both the storage units (HLR, VLR) assigned to a subscriber and
- every time a storage unit (HLR, VLR) is reassigned to a subscriber and/or
- whenever additional information (IN-Service-Info) is modified,
- a true image of the current additional information (IN-Service-Info) is generated in the at least two storage units (HLR, VLR).

2. Method according to claim 1,
in which at least parts of the additional information (IN-Service-Info) are transmitted between the storage units (HLR, VLR) in a message relating to the subscriber data input (insertSubscriberDataArg).

3. Method according to claim 1 or 2,
in which the additional information (IN-Service-Info) contains details (SAF) about the ability of the respective additional service (SS) to be activated or modified.

4. Method according to one of claims 1 to 3,
in which a subscriber-specific activation character (flag) is provided in the storage unit (HLR, VLR) for all the additional services (SS), and is interrogated during connection setup and the additional information (IN-Service-Info) is taken into account during connection setup as a function of the result of the comparison.

5. Method according to one of claims 1 to 4,
in which the additional information (IN-Service-Info) contains details about the type of the respective additional service (SS) and/or a communication-network-specific address (SCM data) of the respective data control unit (SCP).

6. Method according to one of claims 1 to 5,
in which the additional information (IN-Service-Info) contains details about a service key (SK) of the respective additional service (SS), said service key (SK) being specific to a service control unit.

7. Method according to one of claims 1 to 6,
in which the additional information (IN-Service-Info) contains details about the identity of the service provider (SCP/SP) providing the respective additional service (SS).

8. Method according to one of claims 1 to 7,
in which the additional information (IN-Service-Info) and/or the activation character (flag) can be modified by a subscriber via the communication terminal (MS), in so far as such a modification is not blocked.

9. Method according to one of claims 1 to 8,
in which modification information (SCMST) relating to the additional information (IN-Service-Info) is transmitted from the communication terminal (MS) to the storage units (HLR, VLR) and/or between the storage units (HLR, VLR) within unstructured additional service data (USSD).

10. Method according to one of claims 1 to 9,
in which if additional services (SS) are deactivated, an enquiry at the respective service control unit (SCP) is suppressed by the switching facility (VMSC, GMSC) interrogating the respective storage unit (HLR, VLR).

11. Method according to one of the preceding claims,
in which to select one of a number of service providers providing the respective additional service (SS) the identity of the service provider (SCP/SP) is evaluated within unstructured additional service data (USSD) and a data set of the additional information (IN-Service-Info) is addressed in a manner that selects the service provider (SCP/SP).

12. Method according to claim 11,
in which the identity of the service provider (SCP/SP) is communicated in a service identification element (SIA) of the unstructured additional service data (USSD).

## Revendications

1. Procédé pour l'administration de services supplémentaires (SS) dans un réseau de communication mobile (GSM)
- avec des dispositifs de commutation interconnectés (VMSC, GMSC), auxquels des terminaux de communication (MS) permettant l'accès des abonnés sont connectables par d'autres dispositifs (BS) et/ou par lesquels des passages à d'autres réseaux (PSTN) peuvent être obtenus,
- comprenant au moins une unité de commande de services (SCP) commandant le service supplémentaire (SS) respectif, et
- avec au moins deux unités de mémorisation (HLR, VLR) pour des données spécifiques à l'abonné (TD), **caractérisé en ce que**,
dans les deux unités de mémorisation (HLR, VLR) attribuées à un abonné, existent des informations supplémentaires (IN-Service-Info) mémorisées de façon spécifique à l'abonné sur l'attribution de services supplémentaires (SS) respectivement à des unités de commande de services (SCP) et l'état du service supplémentaire (SS) respectif, et
- lors de chaque nouvelle attribution d'une unité de mémorisation (HLR, VLR) à un abonné et/ou
- lors de chaque modification d'informations supplémentaires (IN-Service-Info)
- une représentation fidèle des informations supplémentaires actuelles (IN-Service-Info) est générée dans les au moins deux unités de mémorisation (HLR, VLR).

2. Procédé selon la revendication 1, dans lequel
au moins des parties des informations supplémentaires (IN-Service-Info) sont transmises entre les unités de mémorisation (HLR, VLR) dans un message concernant l'inscription de données d'abonné (insertSubscriberData-Arg).

3. Procédé selon la revendication 1 ou 2, dans lequel
les informations supplémentaires (IN-Service-Info) contiennent des indications (SAF) relatives à une possibilité d'activation resp. de modification du service supplémentaire (SS) respectif.

4. Procédé selon l'une quelconque des revendications 1 à 3, dans lequel un signe d'activation (flag) individuel par abonné est prévu pour la totalité des services supplémentaires (SS) dans l'unité de mémorisation (HLR, VLR), qui est interrogé lors d'un établissement de liaison et les informations supplémentaires (IN-Service-Info) sont prises en compte lors de l'établissement de liaison en fonction du résultat de la comparaison.

5. Procédé selon l'une quelconque des revendications 1 à 4, dans lequel les informations supplémentaires (IN-Service-Info) contiennent des indications concernant la nature (type) du service supplémentaire (SS) respectif et/ou une adresse (SCM-Data) spécifique au réseau de communication de l'unité de commande de services (SCP) respective.

6. Procédé selon l'une quelconque des revendications 1 à 5, dans lequel les informations supplémentaires (IN-Service-Info) contiennent des indications concernant un code de service (SK), spécifique à l'unité de commande de services du service supplémentaire (SS) respectif.

7. Procédé selon l'une quelconque des revendications 1 à 6, dans lequel les informations supplémentaires (IN-Service-Info) contiennent des indications sur l'identité du prestataire de services (SCP/SP) offrant le service supplémentaire (SS) respectif.

8. Procédé selon l'une quelconque des revendications 1 à 7, dans lequel les informations supplémentaires (IN-Service-Info) et/ou le signe d'activation (flag) peuvent être modifiés par un abonné via le terminal de communication (MS), dans la mesure où aucun blocage n'est prévu pour cette modification.

9. Procédé selon l'une quelconque des revendications 1 à 8, dans lequel des informations de modification (SCMST) concernant les informations supplémentaires (IN-Service-Info) sont transmises du terminal de communication (MS) aux unités de mémorisation (HLR, VLR) et/ou entre les unités de mémorisation (HLR, VLR) à l'intérieur de données de service supplémentaire (USSD) non structurées.

10. Procédé selon l'une quelconque des revendications 1 à 9, dans lequel, en cas de services supplémentaires (SS) désactivés, une demande complémentaire effectuée auprès de l'unité de commande de services (SCP) respective est supprimée par le dispositif de commutation (VMSC, GMSC) interrogeant l'unité de mémorisation (HLR, VLR) respective.

11. Procédé selon l'une quelconque des revendications précédentes, dans lequel, pour le choix d'un de plusieurs prestataires de services offrant le service supplémentaire (SS) respectif, l'identité du prestataire de services (SCP/SP) est analysée à l'intérieur de données de service supplémentaire (USSD) non structurées et un adressage, sélectionnant le prestataire de services (SCP/SP), d'un ensemble de données des informations supplémentaires (IN-Service-Info) est effectué.

12. Procédé selon la revendication 11, dans lequel l'identité du prestataire de services (SCP/SP) est transmise dans une partie d'identification de service (SIA) des données de service supplémentaire (USSD) non structurées.
